# EUROPÄISCHE PATENTSCHRIFT

(11) **EP 1 797 753 B1**
(45) Veröffentlichungstag und Bekanntmachung des Hinweises auf die Patenterteilung: **03.06.2009**
(21) Anmeldenummer: 06125001.5
(22) Anmeldetag: 29.11.2006
(51) Int. Cl.: A01F 29/10

(54) **Feldhäcksler**
Forage harvester
Faucheuse-hâcheuse

(30) Priorität: 15.12.2005 DE 102005059953
(43) Veröffentlichungstag der Anmeldung: 20.06.2007
(73) Patentinhaber: Deere & Company, Moline, IL 61265-8098 (US)
(72) Erfinder: Schäfer, Rainer, 66482, Zweibrücken (DE)
(74) Vertreter: Holst, Sönke

(56) Entgegenhaltungen:
- EP-A- 1 277 395
- EP-A1- 0 519 209
- DE-A1- 3 633 721
- DE-A1- 19 539 143
- US-A- 3 431 712

## Beschreibung

Die Erfindung betrifft einen Feldhäcksler mit wenigstens einer drehbaren unteren Vorpresswalze und wenigstens einer drehbaren oberen Vorpresswalze, zwischen welchen eine Erntegutmatte hindurch und zu einer unmittelbar stromab der Vorpresswalzen angeordneten Häckseltrommel führbar ist, um deren Umfang mit einer Gegenschneide zusammenwirkende Messer verteilt sind, wobei die der Gegenschneide gegenüberliegend angeordnete Vorpresswalze orthogonal zur Bewegungsrichtung der Erntegutmatte bewegbar und gegen die andere Vorpresswalze vorgespannt ist.

### Stand der Technik

Feldhäcksler werden in der Landwirtschaft verwendet, um Erntegut mittels einer Erntegutaufnahmevorrichtung von einem Feld abzuschneiden oder aufzusammeln, über eine Zuführeinrichtung einer Häckseleinrichtung zuzuführen, in der Regel eine Häckseltrommel oder ein Scheibenradhäcksler, um es zu häckseln und es, in der Regel nach einer Beschleunigung mittels eines Gebläses, durch einen in seiner Position verstellbaren Auswurfkrümmer auf ein Transportfahrzeug auszutragen. Die geernteten Pflanzen werden in den meisten Fällen als Silage zum Verfüttern an Tiere oder in jüngerer Zeit zur Biogasproduktion verwendet.

Die Zuführeinrichtung umfasst bei derzeit gebräuchlichen Feldhäckslern zwei untere, starr am Rahmen des Feldhäckslers gelagerte Vorpresswalzen und zwei mit diesen zusammenwirkende obere Vorpresswalzen (s. EP 0 519 209 A oder die DE 100 21 657 A mit jeweils drei Vorpresswalzen). Die oberen Vorpresswalzen sind gegen die Kraft einer Feder oder mehrerer Federn höhenbeweglich gelagert, um beim Einzug von Erntegut nach oben ausweichen zu können. Die Feder hat die Aufgabe, die oberen Vorpresswalzen mit einer definierten Kraft zu beaufschlagen, damit die im Zusammenwirken mit den unteren Vorpresswalzen das Erntegut einerseits beim Einzug vorverdichten können und andererseits mit Hilfe dieser Walzenkraft den Einzug des Ernteguts und dessen Transport zur Häckseltrommel überhaupt erst möglich machen. Der eigentliche Schnittvorgang erfolgt durch die mit rotierenden Messern besetzte Häckseltrommel gegen eine stationäre Gegenschneide als Widerlager.

Die rückwärtige, obere Vorpresswalze ist üblicherweise an einer Schwinge gelagert (s. EP 0 519 209 A oder DE 102 35 096 A) und bewegt sich, wenn Erntegut eingezogen wird, gegen die Federkraft auf einer Kurvenbahn nach oben. Die Kurvenbahn wird möglichst nahe am Außendurchmesser der Häckseltrommel geführt. Durch die Drehbewegung der oberen Walze und den Abstand zwischen ihrer mit dem Erntegut zusammenwirkenden Fläche und der Häckseltrommel geht allerdings ein Teil der Vorpresswirkung verloren und die Erntegutmatte fächert in ihrem oberen Bereich stromab der Vorpresswalze wieder leicht auf. Kommt nun ein rotierendes Messer der Häckseltrommel mit diesen oberen Teilen der Gutmatte in Kontakt, so wird im weiteren Verlauf die Gutmatte teilweise wieder komprimiert, bis es zur Durchtrennung kommt. Es kann aber beobachtet werden, dass insbesondere dünne Stängelteile und Lieschblätter bei diesem Vorgang durch eine Messerkante durchgezogen werden und erst durch das nächste oder ein später folgendes Messer durchtrennt werden. Dadurch entstehen unerwünschte Überlängen, die bei der Weiterverwendung der Silage zu Problemen führen können, z. B. bei der Verfütterung von den Tieren nicht aufgenommen werden.

In der EP 1 277 395 A wird ein Feldhäcksler beschrieben, bei dem ein feststehendes, flaches Leitelement oberhalb der Gegenschneide angeordnet ist. Durch das Leitelement wird der Erntegutstrom in zwei übereinander fließende Teilströme aufgeteilt. Hier wird durch das Leitelement keine befriedigende Vorpresswirkung erzielt.

### Aufgabe der Erfindung

Die der Erfindung zu Grunde liegende Aufgabe wird darin gesehen, einen Feldhäcksler mit einer verbesserten Vorpresswirkung bereitzustellen.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Ein Feldhäcksler umfasst wenigstens eine untere und eine obere Vorpresswalze, die im Erntebetrieb eine Erntegutmatte zu einer Häckseltrommel fördern, welche mit Messern besetzt ist, die mit einer Gegenschneide zusammenwirken, um die Erntegutmatte in kleine Teile zu häckseln. Die der Gegenschneide gegenüberliegende Vorpresswalze, bei der es sich in der Regel - jedoch nicht notwendigerweise - um die obere Vorpresswalze handelt, ist orthogonal zur Flussrichtung der Erntegutmatte bewegbar und - in der Regel durch Federkraft und/oder einen Hydraulikzylinder - gegen die andere Vorpresswalze vorgespannt, um die gewünschte Vorpresswirkung zu erzielen. Da die Häckseltrommel unmittelbar stromab der Vorpresswalzen angeordnet ist, befindet sich keine weitere Vorpresswalze zwischen der Häckseltrommel und den erwähnten Vorpresswalzen. Die bewegbare Vorpresswalze ragt fast bis an den Umfang der Häckseltrommel heran. Um im Bereich stromab der bewegbaren Vorpresswalze und stromauf der Häckseltrommel eine Vorpresswirkung auf die Erntegutmatte zu erzielen, wird vorgeschlagen, an dieser Stelle ein weiteres auf die Erntegutmatte einwirkendes Druckelement anzubringen. Das Druckelement ist demnach in dem Raum angeordnet, der durch die stromab der bewegbaren Vorpresswalze befindliche Erntegutmatte, die Häckseltrommel und die bewegbare Vorpresswalze begrenzt ist und einen etwa dreieckförmigen Querschnitt aufweist.

Auf diese Weise wird ein Auffächern der Erntegutmatte stromab der letzten Vorpresswalze vor der Häckseltrommel verhindert. Die Vorpressung der Erntegutmatte wird bis möglichst nahe an den Außendurchmesser der Häckseltrommel aufrechterhalten, was zu einer verbesserten Schnittqualität und einer Vermeidung von unerwünschten Überlängen führt.

Das Vorpresselement ist vorzugsweise quer zur Bewegungsrichtung der Erntegutmatte bewegbar und gegen sie vorgespannt. Es könnte aber auch starr angebracht sein.

Gegenüber einer ebenfalls denkbaren Lösung mit einem nicht rotierenden Leitblech oder Leitkeil hat ein rotierendes Druckelement den Vorteil, dass die Erntegutmatte nicht gebremst und aufgestaut wird. Ein rotierendes Druckelement kann frei (d. h. nicht angetrieben) mitlaufen oder angetrieben werden, insbesondere mit einer Umfangsgeschwindigkeit, die der Umfangsgeschwindigkeit der bewegbaren Vorpresswalze entspricht. Es ist insbesondere zylindrisch und mit einer glatten Oberfläche ausgestattet, obwohl auch Mitnehmer o. ä. auf seiner Oberfläche angebracht werden könnten, und wesentlich kleineren Durchmessers als die bewegbare Vorpresswalze.

Das Druckelement ist vorzugsweise gemeinsam mit der bewegbaren Vorpresswalze beweglich. Es kann beispielsweise an einer Letztere abstützenden Schwinge montiert werden, die sich auf einer Kurvenbahn bewegt, welche möglichst nahe am Außendurchmesser der Häckseltrommel geführt wird.

### Ausführungsbeispiel

In den Zeichnungen ist ein nachfolgend näher beschriebenes Ausführungsbeispiel der Erfindung dargestellt. Es zeigt:
- Fig. 1: einen Feldhäcksler mit einer Zuführeinrichtung in Seitenansicht und in schematischer Darstellung, und
- Fig. 2: eine schematische seitliche Ansicht der Vorpresswalzen und der Häckseltrommel des Feldhäckslers mit einem erfindungsgemäßen Druckelement, das stromab der bewegbaren Vorpresswalze und stromauf der Häckseltrommel eine Vorpresswirkung auf die Erntegutmatte ausübt.

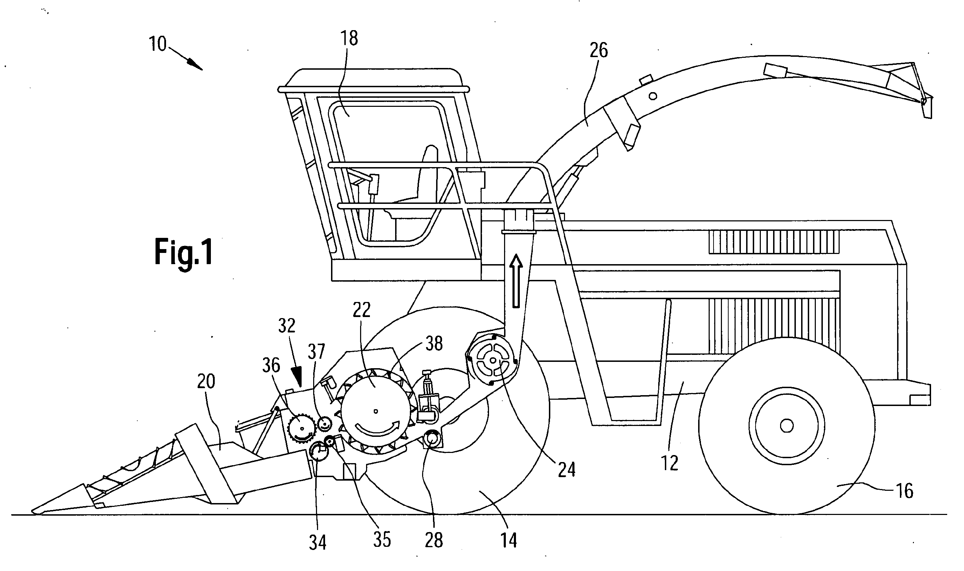

Ein in der Figur 1 gezeigter selbst fahrender Feldhäcksler 10 baut sich auf einem Rahmen 12 auf, der von vorderen und lenkbaren rückwärtigen Rädern 14 und 16 getragen wird. Die Bedienung des Feldhäckslers 10 erfolgt von einer Fahrerkabine 18 aus, von der aus eine im vorliegenden Ausführungsbeispiel als Maismähvorsatz ausgebildete Erntegutaufnahmevorrichtung 20 einsehbar ist. Mittels der Erntegutaufnahmevorrichtung 20 vom Boden aufgenommenes Gut, z. B. Mais, Gras oder dergleichen wird durch eine in einem Einzugskanal des Feldhäckslers 10 angeordnete Zuführeinrichtung 32 mit unteren Vorpresswalzen 34, 35 und oberen Vorpresswalzen 36, 37 einer mit Messern 38 besetzten Häckseltrommel 22 zugeführt, die es in kleine Stücke häckselt und es einer Fördervorrichtung 24 aufgibt. Das Gut verlässt den Feldhäcksler 10 zu einem nebenher fahrenden Anhänger oder anderen Transportfahrzeug über einen drehbaren Austragsschacht 26. Zwischen der Häckseleinrichtung 22 und der Fördervorrichtung 24 ist eine aus zwei übereinander angeordneten Prozessorwalzen aufgebaute Nachzerkleinerungsvorrichtung 28 angeordnet, durch die das zu fördernde Gut der Fördervorrichtung 24 tangential zugeführt wird.

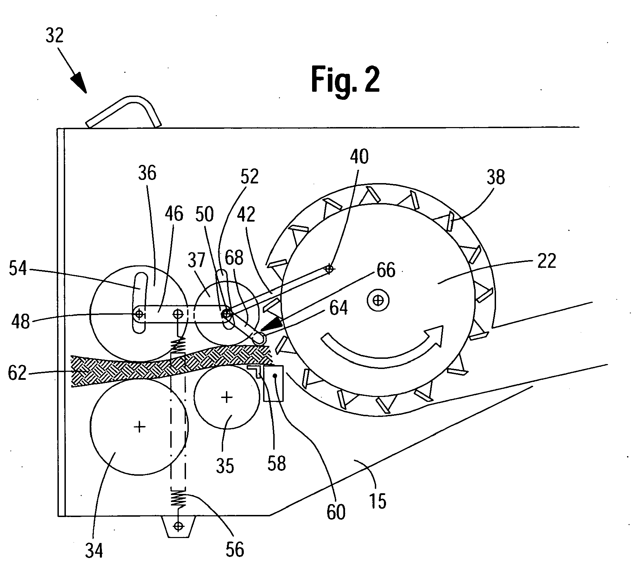

Die Figur 2 zeigt eine schematische Darstellung der Zuführeinrichtung 32 und der Häckseltrommel 22. Die unteren Vorpresswalzen 34, 35 sind drehbar an einem am Rahmen 12 des Feldhäckslers 10 abnehmbar befestigten Einzugsgehäuse 15 gelagert und werden im Erntebetrieb mittels eines Schnittlängengetriebes (nicht gezeigt, s. jedoch DE 102 07 467 A, deren Offenbarung durch Verweis mit in die vorliegenden Unterlagen aufgenommen wird) in Drehung versetzt. An Drehpunkten 40 sind beidseits des Einzugsgehäuses 15 Schwenkelemente 42 um parallel zur Drehachse der Vorpresswalzen 34-37 verlaufende Achsen drehbar gelagert. An deren freien Enden 44 sind Schwingen 46 ebenfalls um parallel zur Drehachse der Vorpresswalzen 34-37 verlaufende Achsen drehbar gelagert. Diese haben jeweils eine vordere Lagerstelle 48 und eine hintere Lagerstelle 50, in denen Wellen der oberen Vorpresswalzen 36, 37 drehbar gelagert sind. Die Wellen der oberen Vorpresswalzen 36, 37 können sich mit der Halterung 46 im Bereich von Schlitzen 52, 54, die sich im Einzugsgehäuse 15 befinden, frei nach oben und unten bewegen. Die Wellen der oberen Vorpresswalzen 36, 37 werden im Erntebetrieb ebenfalls durch das Schnittlängengetriebe angetrieben, gegensinnig zu den unteren Vorpresswalzen 34, 35.

An der Schwinge 46 ist ein erstes Ende einer als Schraubenfeder ausgeführten Feder 56 befestigt, deren zweites Ende am Einzugsgehäuse 15 befestigt ist. Es können sich Federn 56 an beiden Seiten des Einzugsgehäuses 15 befinden. Bei einer anderen Ausführungsform befinden sich nur auf einer Seite des Einzugsgehäuses 15 eine Feder 56, wobei die Schwingen 46 auf beiden Seiten des Einzugsgehäuses 15 untereinander durch eine Querverbindung verbunden sind.

Stromab der rechts eingezeichneten, unteren Vorpresswalze 35 mit glatter Oberfläche befinden sich ein Abstreifer 58 und eine Gegenschneide 60, mit der die Messer 38 der Häckseltrommel 22 zusammenwirken, um den zwischen den Vorpresswalzen 34-37 eingezogenen Erntegutstrang 62 zu häckseln, welcher durch die mit der Feder 56 gegen die unteren Vorpresswalzen 34, 35 vorgespannten, oberen Vorpresswalzen 36, 37 verdichtet wird.

Stromab der oberen Vorpresswalze 37 ergibt sich ein Raum 66 mit etwa dreieckigem Querschnitt, der durch die stromab der Vorpresswalze 37 befindliche Erntegutmatte 62, die Häckseltrommel 22 und die Vorpresswalze 37 begrenzt ist. In diesem Raum 66 kann sich die Erntegutmatte 62 bei bisherigen Feldhäckslern wieder nach oben ausdehnen, da keine obere Begrenzung für sie vorliegt. Die mögliche Expansion der Erntegutmatte 62 hat nachteilige Auswirkungen auf die Schnittqualität, da das Erntegut von oben her nicht hinreichend festgehalten wird.

Um diesen Nachteil zu vermeiden, ist in dem Raum 66 ein zylindrisches Druckelement 64 vorhanden, welches sich parallel zu den Achsen der Vorpresswalzen 34-37 und der Häckseltrommel 22 über deren gesamten Breiten erstreckt. Das Druckelement 64 weist eine glatte Oberfläche auf und ist (frei drehend oder antriebsmäßig mit der Vorpresswalze 37 gekoppelt) drehbar an einer Halterung 68 gelagert, welche an der Schwinge 46 angebracht ist.

Das Druckelement 64 ist demnach mit den oberen Vorpresswalzen 36, 37 in vertikaler Richtung bewegbar und durch die Feder 56 gegen die Erntegutmatte 62 vorgespannt. Das Druckelement 64 verhindert ein Auffächern der Erntegutmatte 62 stromab der Vorpresswalze 37 und führt zu einer Verbesserung der Schnittqualität, insbesondere zu einer Vermeidung von Überlängen.

## Patentansprüche

1. Feldhäcksler (10) mit wenigstens einer drehbaren unteren Vorpresswalze (34, 35) und wenigstens einer drehbaren oberen Vorpresswalze (36, 37), zwischen welchen eine Erntegutmatte (62) hindurch und zu einer unmittelbar stromab der Vorpresswalzen (34-37) angeordneten Häckseltrommel (22) führbar ist, um deren Umfang mit einer Gegenschneide (60) zusammenwirkende Messer (38) verteilt sind, wobei die der Gegenschneide (60) gegenüberliegend angeordnete Vorpresswalze (37) orthogonal zur Bewegungsrichtung der Erntegutmatte (62) bewegbar und gegen die andere Vorpresswalze (35) vorgespannt ist, **dadurch gekennzeichnet, dass** in dem Raum (66), der durch die stromab der bewegbaren Vorpresswalze (37) befindliche Erntegutmatte (62), die Häckseltrommel (22) und die bewegbare Vorpresswalze (37) begrenzt ist und einen etwa dreieckförmigen Querschnitt aufweist, ein weiteres auf die Erntegutmatte (62) einwirkendes Druckelement (64) angeordnet ist, das stromab der bewegbaren Vorpresswalze (37) und stromauf der Häckseltrommel (22) eine Vorpresswirkung auf die Erntegutmatte (62) ausübt.

2. Feldhäcksler (10) nach Anspruch 1, **dadurch gekennzeichnet, dass** das Druckelement (64) orthogonal zur Bewegungsrichtung der Erntegutmatte (62) bewegbar und gegen die Erntegutmatte (62) vorgespannt ist.

3. Feldhäcksler (10) nach Anspruch 1 oder 2, **dadurch gekennzeichnet, dass** das Druckelement (64) freilaufend oder angetrieben drehbar ist.

4. Feldhäcksler (10) nach einem der Ansprüche 1 bis 3, **dadurch gekennzeichnet, dass** das Druckelement (64) zylindrisch ist und einen wesentlich kleineren Durchmesser als die bewegbare Vorpresswalze (37) aufweist.

5. Feldhäcksler (10) nach einem der Ansprüche 1 bis 4, **dadurch gekennzeichnet, dass** das Druckelement (64) gemeinsam mit der bewegbaren Vorpresswalze (37) beweglich ist.

6. Feldhäcksler (10) nach einem der vorhergehenden Ansprüche, **dadurch gekennzeichnet, dass** die bewegbare Vorpresswalze (37) an einer Schwinge (46) gelagert ist, die durch an Drehpunkten (40) gelagerte Schwenkelemente (42) mit einem Einzugsgehäuse (15) verbunden ist.

7. Feldhäcksler (10) nach Anspruch 6, **dadurch gekennzeichnet, dass** das Druckelement (64) an einer mit der der Schwinge (46) verbundenen Halterung (68) angebracht ist.

## Claims

1. Forage harvester (10) with at least one rotatable lower precompacting roller (34, 35) and at least one rotatable upper precompacting roller (36, 37) between which a crop mat (62) can be fed to a forage chopping cylinder (22) which is arranged directly downstream of the precompacting rollers (34 - 37) and around the circumference of which blades (38) which interact with a countercutter (60) are distributed, wherein the precompacting roller (37) which is arranged opposite the countercutter (60) can be moved orthogonally with respect to the direction of movement of the crop mat (62) and is prestressed against the other precompacting roller (35), **characterized in that** a further pressure element (64) which acts on the crop mat (62) is arranged in the space (66) which is bounded by the crop mat (62), which is located downstream of the movable precompacting roller (37), and by the forage chopping cylinder (22) and the movable precompacting roller (37) and has an approximately triangular cross section, said pressure element exerting a precompacting effect on the crop mat (62) downstream of the movable precompacting roller (37) and upstream of the forage chopping cylinder (22).

2. Forage harvester (10) according to Claim 1, **characterized in that** the pressure element (64) is movable orthogonally with respect to the direction of movement of the crop mat (62) and is prestressed against the crop mat (62).

3. Forage harvester (10) according to Claim 1 or 2, **characterized in that** the pressure element (64) is rotatable in a free-running or driven manner.

4. Forage harvester (10) according to one of Claims 1 to 3, **characterized in that** the pressure element (64) is cylindrical and has a substantially smaller diameter than the movable precompacting roller (37).

5. Forage harvester (10) according to one of Claims 1 to 4, **characterized in that** the pressure element (64) is movable together with the movable precompacting roller (37).

6. Forage harvester (10) according to one of the preceding claims, **characterized in that** the movable precompacting roller (37) is mounted on a rocker (46) which is connected to a take-in housing (15) by means of pivoting elements (42) mounted on pivots (40).

7. Forage harvester (10) according to Claim 6, **characterized in that** the pressure element (64) is attached to a holder (68) connected to the rocker (46).

## Revendications

1. Faucheuse-hacheuse (10) comprenant au moins un rouleau de pré-pressage inférieur rotatif (34, 35) et au moins un rouleau de pré-pressage supérieur rotatif (36, 37), entre lesquels peut être guidé un matelas de plantes récoltées (62) qui est amené à un rotor hacheur (22) disposé directement en aval des rouleaux de pré-pressage (34-37), autour de la périphérie duquel sont répartis des couteaux (38) coopérant avec un contre-couteau (60), le rouleau de pré-pressage (37) disposé en regard du contre-couteau (60) pouvant être déplacé perpendiculairement à la direction de déplacement du matelas de plantes récoltées (62) et étant précontraint contre l'autre rouleau de pré-pressage (35), **caractérisée en ce que** dans l'espace (66) qui est limité par le matelas de plantes récoltées (62) se trouvant en aval du rouleau de pré-pressage mobile (37), par le rotor hacheur (22) et par le rouleau de pré-pressage mobile (37), et qui présente une section transversale approximativement triangulaire, on dispose un autre élément de pressage (64) agissant sur le matelas de plantes récoltées (62), lequel exerce une action de pré-pressage sur le matelas de plantes récoltées (62) en aval du rouleau de pré-pressage mobile (37) et en amont du rotor hacheur (22).

2. Faucheuse-hacheuse (10) selon la revendication 1, **caractérisée en ce que** l'élément de pressage (64) est déplaçable perpendiculairement à la direction de déplacement du matelas de plantes récoltées (62) et est précontraint contre le matelas de plantes récoltées (62).

3. Faucheuse-hacheuse (10) selon la revendication 1 ou 2, **caractérisée en ce que** l'élément de pressage (64) peut tourner en roue libre ou de manière entraînée.

4. Faucheuse-hacheuse (10) selon l'une quelconque des revendications 1 à 3, **caractérisée en ce que** l'élément de pressage (64) est cylindrique et présente un diamètre essentiellement plus petit que le rouleau de pré-pressage mobile (37).

5. Faucheuse-hacheuse (10) selon l'une quelconque des revendications 1 à 4, **caractérisée en ce que** l'élément de pressage (64) est déplaçable conjointement avec le rouleau de pré-pressage mobile (37).

6. Faucheuse-hacheuse (10) selon l'une quelconque des revendications précédentes, **caractérisée en ce que** le rouleau de pré-pressage mobile (37) est monté sur une bielle oscillante (46) qui est connectée à un boîtier d'alimentation (15) par des éléments pivotants (42) montés sur des pivots (40).

7. Faucheuse-hacheuse (10) selon la revendication 6, **caractérisée en ce que** l'élément de pressage (64) est monté sur un support (68) connecté à la bielle oscillante (46).
